# EUROPEAN PATENT SPECIFICATION

(11) **EP 2 202 364 B1**
(45) Date of publication and mention of the grant of the patent: **24.08.2016**
(21) Application number: 09179571.6
(22) Date of filing: 17.12.2009
(51) Int. Cl.: E02F 9/18, B66C 23/76, B66F 11/04, E02F 9/02, B62D 37/04, B62D 55/10, B66C 23/74

(54) **Vehicle with lifting arm and with removable counterweight**
Fahrzeug mit Hubarm und mit entfernbarem Gegengewicht
Véhicule avec bras de relevage et avec contre-poids démontable

(30) Priority: 18.12.2008 IT TO20080952
(43) Date of publication of application: 30.06.2010
(73) Proprietor: New Holland Kobelco Construction Machinery S.p.A., 10099 San Mauro Torinese (TO) (IT)
(72) Inventor: Caporale, Davide, 10072 Mappano di Caselle (IT); Bellino, Marilena, 10154 Torino (IT)
(74) Representative: Gunst, Wilfried E.D.

(56) References cited:
- EP-A1- 0 071 796
- WO-A1-2008/010033
- DE-U1- 9 404 670
- JP-A- S58 199 275
- JP-U- S5 756 689
- JP-U- 54 009 416
- JP-U- 59 136 385
- JP-U- S63 185 853
- KR-B1- 100 611 716
- US-A- 5 460 246

## Description

### Field of the invention

The present invention relates to a vehicle having a lifting arm.

### Background of the invention

There are many different types of vehicle that have an undercarriage that is driven by wheels or endless tracks and supports a lifting arm. Such vehicles include mobile cranes, excavators and telehandlers, this not being intended as an exhaustive list. Any such vehicle risks tipping, or toppling, if the moment of the lifting arm exceeds the moment of the undercarriage.

To avoid the risk of tipping, it has previously been proposed to attach removable counterweights to the undercarriage. The counterweights are attached to the undercarriage of the vehicle to avoid additional stress on the turntable and thus increase durability. Such earlier proposals are to be found in JP 11-117352 and JP 8-143277. The counterweights need to be removable to avoid increasing the width of the undercarriage when it is in transport mode, i.e. being driven or carried on a trailer on an open road.

A vehicle according to the preamble of claim 1 is known from JP563185853U.

However, the prior art proposals for mounting and removing of the counterweights are time consuming and require temporary fixings to be bolted on to, or removed from, the undercarriage.

### Object of the invention

The present invention seeks to mitigate the foregoing problem by simplifying the manner in which counterweights are mounted on and removed from the undercarriage.

### Summary of the invention

According to the present invention, there is provided a vehicle having a wheel or endless track driven undercarriage supporting a lifting arm, wherein the undercarriage of the vehicle is provided with formations on a vertical lateral surface to engage with mating formations on a vertical lateral surface of a removable counterweight, the formations being shaped to engage by sliding the counterweight in a vertical plane relative to the undercarriage and, when engaged, to support the weight of the counterweight vertically and prevent separation of the counterweight from the undercarriage. The formations being positioned to receive a removable counterweight entirely at one side of said undercarriage and wherein each counterweight is additionally provided with means of attachment so that it may be mounted and removed from the undercarriage using the lifting arm of the vehicle

In a preferred embodiment of the invention, the engaging formations include large-headed projections on one of the two vertical lateral surfaces of which the heads engage in wide-based channels in the other of the vertical lateral surfaces.

The term "large-headed" is intended to include any projection that is larger at its head than its base. The projection can be mushroom-shaped or T-shaped with a wide head extending laterally beyond a narrower stem or it may be dovetail shaped. Likewise, the term "wide-based" is intended to include any channel that is wider at its base than at its mouth and it can be C-shaped or dovetail shaped.

Conveniently, each counterweight is additionally provided with means of attachment so that it may be mounted and removed from the undercarriage using the lifting arm of the vehicle.

Advantageously, the channels and the projections are shaped to engage with one another by the action of lowering the counterweight onto the formations on the undercarriage.

### Brief description of the drawings

The invention will now be described further, by way of example, with reference to the accompanying drawings, in which :
Figure 1 is a side view of a endless track driven undercarriage of a mobile excavator,
Figure 2 is a front view of the undercarriage of Figure 1,
Figure 3 is a plan view of the undercarriage of Figures 1 and 2,
Figure 4 is a partial perspective view of the undercarriage of Figures 1 to 3, showing the formations that engage the formations on the counterweight,
Figure 5 is a perspective view of a counterweight showing the formations that engage the formations on the undercarriage,
Figure 6 shows a horizontal section through the formations on the undercarriage and the counterweight when engaged with one another, and
Figure 7 is a photograph showing a counterweight of the invention mounted on the undercarriage of a track driven excavator.

### Detailed description of the preferred embodiment(s)

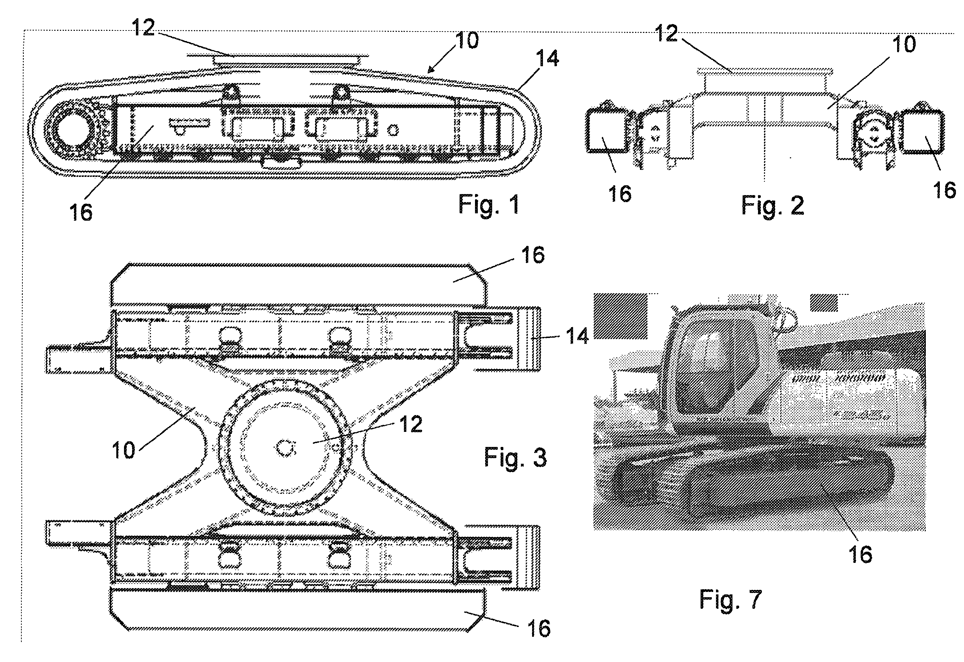

The undercarriage 10 is Figure 1 has a turntable 12 on which there is rotatably mounted a structure (see Figure 7) that includes, amongst other things, the operator cab and the lifting arm of a mobile excavator or crane. The illustrated undercarriage is driven by two endless tracks 14 but the invention is equally applicable to a vehicle that is wheel driven.

In any such vehicle, to reduce the possibility of tipping when lifting an unbalanced heavy load, especially when the lifting arm is extended, it is important for the undercarriage to be as wide and as heavy as possible. However, widening the undercarriage is not practical because of the need for it to be transported on an open road. For this reason, the illustrated undercarriage has two counterweights 16 that are removably mounted on the sides of the undercarriage 10.

The use of removable counterweights has been proposed previously but in the prior art the counterweights had to be bolted to the undercarriage or mounted on a removable frame that was bolted to the undercarriage. As a result, the mounting and removing of the counterweights was a laborious and time consuming exercise.

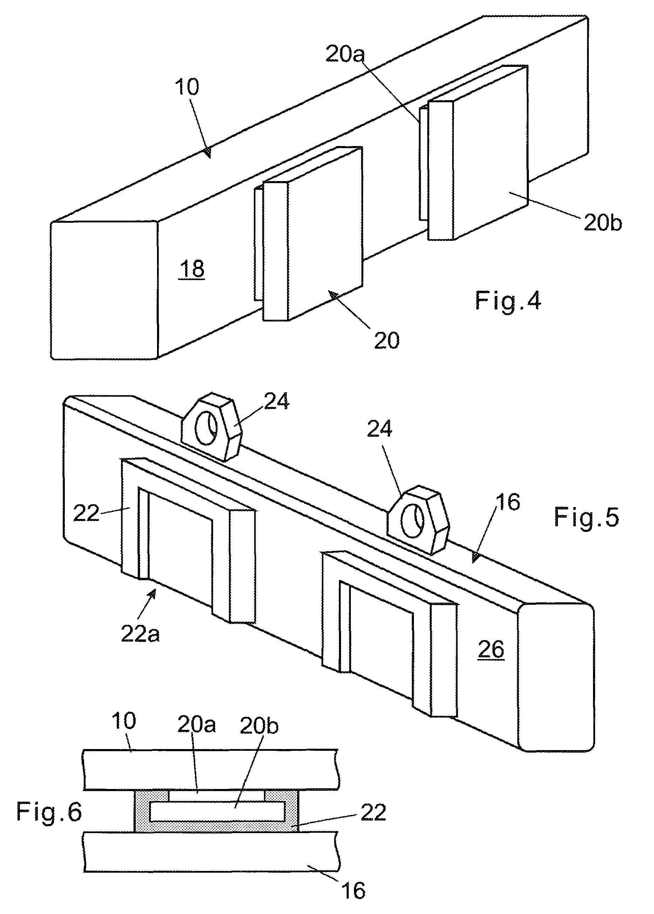

To overcome this disadvantage, the present invention, as best shown by Figures 4 to 6, provides large-headed formations 20 that protrude slightly from a vertical lateral surface 18 of the undercarriage 10, the formations being formed in the illustrated embodiment on the parts of the undercarriage encircled by the endless tracks. Each of the large-headed formations 20 comprises a stem 20a and a head 20b that extends laterally beyond the stem 20a.

The vertical side 26 of the counterweights 16 facing the undercarriage 10 (see Figure 5) has two mating formations 22 which are shaped and dimensioned to fit over the large-headed formations 20 on the side of the undercarriage. The counterweights 16 also have eyelets 24 by means of which they can be attached to the lifting arm of the vehicle.

Each formation 22 on the counterweight 16, as illustrated, defines a channel 22a that is closed at its upper end and open at its lower so that it can be lowered onto one of the formations 20 of the undercarriage from above. In section, as most clearly seen in Figure 6, each formation 22 is C-shaped to engage around and behind the part of the head 20b that projects beyond the stem 20a of the large-headed formation 20. In this way, when the counterweight is raised by the lifting arm using the eyelets 24 and lowered onto the formations 20 of the undercarriage 10, the weight of the counterweight is supported by the closed end of the channel 22a and the counterweight 16 is prevented by separating from the undercarriage 10. No other action needs therefore to be taken aside from lowering the counterweight into place and this operation can itself be carried out by a single operator controlling the lifting arm.

While parallel sided formations have been described, it is alternatively possible for the formations to taper, the head 20b and the channel 22a both being wider at the bottom than at the top. This reduces the positioning tolerance when the counterweight is being lowered into position while preventing its longitudinal to and fro movement once it is in place. In such a design, the angle of taper should be chosen sufficiently large to avoid jamming of the counterweight through taper lock. As well as, or instead of, the head 20b and the channel 22a being wider at the bottom that the top, it is possible for one or both of them to be thicker or deeper at the bottom than at the top, to prevent lateral movement of the counterweight towards and away from the undercarriage.

It will be appreciated that the shape of the formations is not restricted to that illustrated and any formation with an undercut can be used to achieve the same aim of retaining the counterweight against the side of the undercarriage without having to resort to fixings, such as bolts, to hold the counterweight in place.

## Claims

1. A vehicle having a wheel or endless track (14) driven undercarriage (10) supporting a lifting arm, wherein the undercarriage (10) of the vehicle is provided with formations (20) on a vertical lateral surface (18) to engage with mating formations (22) on a vertical lateral surface of a removable counterweight (26), **characterised by** the formations (20) being shaped to engage by sliding the counterweight (16) in a vertical plane relative to the undercarriage (10) and, when engaged, to support the weight of the counterweight (16) vertically and prevent separation of the counterweight (16) from the undercarriage (10), the formations (20) being positioned to receive a removable counterweight (16) entirely at one side of said undercarriage and wherein each counterweight (16) is additionally provided with means of attachment (24) so that it may be mounted and removed from the undercarriage (10) using the lifting arm of the vehicle.

2. A vehicle as claimed in claim 1, wherein the formations comprise heads (20b) and the mating formations comprise channels (22a) and said channels (22a) and said heads (20b) are shaped to engage with one another by the action of lowering the counterweight (16) onto the formations (20) on the undercarriage (10).

3. A vehicle as claimed in claim 2, wherein the formations (20,22) on at least one of the undercarriage (10) and the counterweight (16) are tapered, each being wider at the bottom than at the top.

## Patentansprüche

1. Ein Fahrzeug mit einem durch Räder oder einen Raupenantrieb (14) angetriebenen Fahrgestell (10), das einen Hubarm trägt, wobei das Fahrgestell (10) des Fahrzeuges mit Anordnungen (20) auf einer vertikalen seitlichen Oberfläche (18) für den Eingriff mit zusammenpassenden Anordnungen (22) auf einer vertikalen seitlichen Oberfläche eines entfernbaren Gegengewichtes (26) versehen ist, **dadurch gekennzeichnet, dass** die Anordnungen (20) so geformt sind, dass sie miteinander durch Gleiten des Gegengewichtes (16) in einer vertikalen Ebene gegenüber dem Fahrgestell (10) ein Eingriff kommen, und, wenn sie in Eingriff stehen, das Gewicht des Gegengewichtes in Vertikalrichtung abstützen und eine Trennung des Gegengewichtes (16) von dem Fahrgestell (10) verhindern, wobei die Anordnungen (20) so angeordnet sind, dass sie ein entfernbares Gegengewicht (16) vollständig auf einer Seite des Fahrgestells aufnehmen, und wobei jedes Gegengewicht (16) zusätzlich mit Einrichtungen zur Anbringung (24) derart versehen ist, dass es an dem Fahrgestell (10) befestigt und von diesem entfernt werden kann, wobei der Hubarm des Fahrzeuges verwendet wird.

2. Ein Fahrzeug nach Anspruch 1, bei dem die Anordnungen Köpfe (20b) umfassen und die zusammenpassenden Anordnungen Kanäle (22a) umfassen, und wobei die Kanäle (22a) und die Köpfe (20b) so geformt sind, dass sie miteinander durch die Aktion des Absenkens des Gegengewichtes (14) auf die Anordnungen (20) auf dem Fahrgestell (10) in Eingriff kommen.

3. Ein Fahrzeug nach Anspruch 2, bei dem die Anordnungen (20, 22) auf zumindest einem von dem Fahrgestell (10) und dem Gegengewicht (16) verjüngt sind, wobei sie jeweils breiter am unteren Ende als am oberen Ende sind.

## Revendications

1. Véhicule comportant un sous-châssis (10) entraîné par roue ou chenille sans fin (14) supportant un bras de levage, le sous-châssis (10) étant pourvu d'épaulements (20) sur une surface latérale verticale (18) destinés à s'engager dans des épaulements appariés (22) sur une surface latérale verticale d'un contrepoids démontable (26), **caractérisé en ce que** les épaulements (20) sont façonnés pour s'engager en faisant glisser le contrepoids (16) dans un plan vertical par rapport au sous-châssis (10) et, lorsqu'ils sont engagés, pour supporter le poids du contrepoids (16) verticalement et empêcher le détachement du contrepoids (16) vis-à-vis du sous-châssis (10), les épaulements (20) étant positionnés pour recevoir un contrepoids démontable (16) entièrement sur un côté du dit sous-châssis et dans lequel chaque contrepoids (16) est pourvu en plus de moyens de fixation (24) de façon à pouvoir le monter et le démonter du sous-châssis (10) en utilisant le bras de levage du véhicule.

2. Véhicule selon la revendication 1, **caractérisé en ce que** les épaulements comprennent des têtes (20b) et les épaulements appariés comprennent des rainures (22a) et lesdites rainures (22a) et lesdites têtes (20b) sont façonnées pour s'engager l'une dans l'autre par l'action de l'abaissement du contrepoids (16) sur les épaulements (20) sur le sous-châssis (10).

3. Véhicule selon la revendication 2, **caractérisé en ce que** les épaulements (20,22) sur au moins un du sous-châssis (10) et du contrepoids (16) sont effilés, chacun étant plus large en bas qu'en haut.
